# EUROPÄISCHE PATENTSCHRIFT

(11) **EP 1 854 588 B1**
(45) Veröffentlichungstag und Bekanntmachung des Hinweises auf die Patenterteilung: **05.11.2008**
(21) Anmeldenummer: 06113890.5
(22) Anmeldetag: 12.05.2006
(51) Int. Cl.: B25B 31/00, F16C 29/08

(54) **Verschlußkappeneinpreßvorrichtung mit einem Betätigungselement**
Device for pressing-in closure caps with an actuator
Dispositif pour l'enfoncement des bouchons avec un actionneur

(43) Veröffentlichungstag der Anmeldung: 14.11.2007
(73) Patentinhaber: Indunorm Bewegungstechnik GmbH, 47249 Duisburg (DE)
(72) Erfinder: MATTHES, Klaus-Dieter, 40878 Ratingen (DE)
(74) Vertreter: Schmidt, Frank-Michael

(56) Entgegenhaltungen:
- WO-A2-01/96750
- DE-A1- 4 421 444

## Beschreibung

Die Erfindung betrifft eine Vorrichtung zum Einpressen von Verschlußkappen in mehrere Bohrungen, die entlang der Führungsschiene in einem vorgegebenen Abstand zueinander angeordnet sind und an einer Oberfläche der Führungsschiene münden, wobei die Vorrichtung einen Einpreßbolzen zum Einpressen einer auf einer zu verschließenden Bohrung positionierten Verschlußkappe in diese Bohrung, eine Führungseinrichtung zum Führen der Vorrichtung bei deren Bewegung entlang der Führungsschiene derart, daß der Einpreßbolzen über den Bohrungen positioniert werden kann, eine Arretiervorrichtung zum Arretieren der Vorrichtung beim Einpressen, einen Vorratsspeicher zum Aufnehmen mehrerer Verschlußkappen und einen Zuführmechanismus, der die Verschlußkappen aus dem Vorratsspeicher empfängt und einzeln einer Position zwischen dem Einpreßbolzen und der Oberfläche der Führungsschiene zuführt, aufweist.

Verschlußkappen werden beispielsweise in Bohrungen einer Führungsschiene, durch die Montageschrauben hindurchgeführt worden sind, nach der endgültigen Montage der Führungsschienen eingepreßt, um die Bohrungen zu verschließen.

Die Verschlußkappen (auch Abdeckkappen oder Stopfen genannt) sind üblicherweise aus einem Kunststoff oder einem Metall (z.B. Aluminium, Messing oder Stahl) hergestellt und werden in die Bohrungen derart eingepreßt, daß die Oberflächen der Verschlußkappen mit den benachbarten Oberflächenbereichen der Führungsschienen eine derart ebene Oberfläche bilden, daß keine Vertiefungen gebildet werden, in welchen sich Schmutzpartikel oder Bearbeitungsspäne festsetzen können, die dann in die Linearführungswagen gelangen könnten, was unerwünscht ist.

Die Kunststoff- oder Messing-Verschlußkappen werden häufig manuell mit Hilfe eines eine ebene Unterseite aufweisenden Kunststoffbolzens und eines Schlaghammers eingeschlagen. Zu diesem Zweck wird eine Verschlußkappe über einer Bohrung positioniert, der Kunststoffbolzen aufgelegt und auf die Oberseite des Kunststoffbolzens mit dem Hammer derart geschlagen, daß die Verschlußkappe in die Bohrung bündig eingepreßt wird.

Insbesondere bei Anordnungen, die eine große Anzahl von relativ langen Führungsschienen aufweisen, ist die Zahl der auf diese Weise zu verschließenden Bohrungen derart groß, daß durch das manuelle Einschlagen der Verschlußkappen ein erheblicher Aufwand entsteht.

Es wurde deshalb vorgeschlagen, Vorrichtungen für das Einpressen der Verschlußkappen zu benutzen, die einen Vorrat solcher Verschlußkappen aufnehmen und ein schnelles sukzessives Einpressen mehrerer Kappen entlang einer Führungsschiene gestatten. Derartige Vorrichtungen, die entweder automatisch arbeiten oder manuell bedient werden, sind beispielsweise aus der Veröffentlichung WO 01/96750 A2 , die eine Vorrichtung nach dem Oberbegriff des Anspruchs 1 offenbart bekannt. Die Druckschrift beschreibt mehrere Ausführungsformen. Eine pneumatisch betriebene automatische Vorrichtung zum Einpressen mehrerer Verschlußkappen in mehrere Bohrungen, die entlang der Führungsschienen in einem vorgegebenen Abstand zueinander angeordnet sind, wird zunächst an einer ersten Bohrung positioniert und schreitet dann selbsttätig zu den nachfolgenden Bohrungen fort. Mit einer Reihe unterschiedlicher Ventilsteuerungen und Antriebskolben wird erreicht, daß automatisch Verschlußkappen aus einem Vorratsspeicher entnommen und einer Position oberhalb einer zu verschließenden Bohrung zugeführt werden. Ein Einpreßbolzen drückt eine Verschlußkappe in die Bohrung. Anschließend schreitet die Vorrichtung zur nächsten Bohrung fort. Sämtliche Antriebsvorgänge laufen automatisch und pneumatisch gesteuert ab. Eine ebenfalls in der Druckschrift beschriebene manuelle Vorrichtung wird zunächst an einer zu verschließenden Bohrung mit Hilfe eines in die Bohrung eintauchenden Bolzens positioniert. Anschließend wird die manuelle Vorrichtung durch Betätigen einer Arretiervorrichtung an der Schiene arretiert. Dann wird durch Betätigen eines Hebels zunächst der positionierende Bolzen aus der Bohrung entfernt, zur Seite geschoben und dann eine Verschlußkappe der Bohrung zugeführt, woraufhin ein Einpreßbolzen heruntergedrückt wird, so daß die Verschlußkappe in die Bohrung eingepreßt wird.

Es hat sich herausgestellt, daß der Betrieb der in der Druckschrift beschriebenen pneumatischen automatischen Vorrichtung relativ aufwendig und störanfällig ist. Auch der Betrieb der in der Druckschrift beschriebenen manuellen Vorrichtungen ist relativ aufwendig und langsam, so daß kaum ein Vorteil gegenüber der obengenannten manuellen Einschlagtechnik erzielt wird.

Aufgabe der Erfindung ist es daher, eine Vorrichtung zum Einpressen von Verschlußkappen der eingangs genannten Art zu schaffen, die eine schnelle und einfache Betätigung bei hoher Zuverlässigkeit des Einpressens gestattet.

Diese Aufgabe wird erfindungsgemäß durch eine Vorrichtung mit den Merkmalen des Anspruchs 1 gelöst. Diese Vorrichtung ist von der eingangs genannten Art und dadurch gekennzeichnet, daß ein Betätigungselement über einen Übertragungsmechanismus auf die Arretiervorrichtung und den Einpreßbolzen derart einwirkt, daß bei einem kontinuierlichen Bewegen des Betätigungselements in einer Betätigungsrichtung zunächst die Arretiervorrichtung in eine einen vorgegebenen Abstand zu der zu verschließenden Bohrung aufweisende beabstandete Bohrung eingreift und die Vorrichtung arretiert, bevor beim Weiterbewegen des Betätigungselements der Einpreßbolzen gegen eine über der zu verschließenden Bohrung positionierte Verschlußkappe drückt und diese in die Bohrung einpreßt, und daß das Betätigungselement über den Übertragungsmechanismus auch auf den Zuführmechanismus derart einwirkt, daß bei dem Bewegen des Betätigungselements in der Betätigungsrichtung und/oder dem anschließenden Zurückbewegen des Betätigungselements entgegen der Betätigungsrichtung eine nächste Verschlußkappe der Position zwischen dem Einpreßbolzen und der Oberfläche der Führungsschiene zugeführt wird. Der Einpreßbolzen kann unterschiedlich ausgebildet sein; er kann geradlinig oder gekrümmt, kreiszylindrisch, rechteckig oder konisch sein, verschiebbar oder drehbar angeordnet oder auch mit einem Gewinde versehen sein.

Die erfindungsgemäße Vorrichtung benutzt den mechanischen Übertragungsmechanismus, um mit einem einzigen Betätigungselement sowohl das Arretieren als auch das Einpressen und das Nachführen der nächsten Verschlußkappe zu bewirken. Ein Grob-Positionieren der Vorrichtung wird (durch Verschiebung der Vorrichtung) von dem Bediener vorgenommen, wobei die Arretiervorrichtung ein Fein-Positionieren ausführt, indem sie in die beabstandete Bohrung eingreift.

Bei einer bevorzugten Ausführungsform der Vorrichtung wirkt beim Bewegen des Betätigungselements in der Betätigungsrichtung der Übertragungsmechanismus derart auf den Zuführmechanismus ein, daß eine nächste Verschlußkappe aus dem Vorratsspeicher entnommen wird. Vorzugsweise wirkt dann beim Zurückbewegen des Betätigungselements entgegen der Betätigungsrichtung der Übertragungsmechanismus derart auf den Zuführmechanismus ein, daß dieser eine nächste Verschlußkappe der Position zwischen dem Einpreßbolzen und der Oberfläche der Führungsschiene zuführt. Somit wird mit einem einzigen Hin- und Herbewegen des Betätigungselements ein Arretieren und Einpressen einer ersten Verschlußkappe und das Bereitstellen der nächsten Verschlußkappe erreicht, so daß derselbe Betätigungszyklus bei der nächsten Bohrung erneut beginnen kann.

Bei einer bevorzugten Ausführungsform ist das Betätigungselement von der Hand eines Bedieners betätigbar. Diese Ausführungsform gestattet, daß das Betätigungselement gleichzeitig zum manuellen Führen (Verschieben) der Vorrichtung entlang der Führungsschiene dienen kann. Das Betätigungselement ist vorzugsweise ein von der Hand des Bedieners betätigbarer Schwenkhebel, in dessen Schwenkebene sich die Führungsschiene erstreckt. Alternativ könnte beispielsweise ein linear nach unten drückbarer Schieber vorgesehen sein. Der mechanische Übertragungsmechanismus ist vorzugsweise so ausgebildet, daß das Betätigungselement von wenigstens einer Feder in die Ausgangsposition zurückgedrückt wird.

Bei einer bevorzugten Weiterbildung der Erfindung weist die Arretiervorrichtung einen in die beabstandete Bohrung eingreifenden Zentrierbolzen auf. Dabei handelt es sich beispielsweise um einen zylindrischen, sich konisch verjüngenden Bolzen, der mit Hilfe einer Feder auf die Führungsschiene gedrückt wird und beim Erreichen einer Bohrung in diese einrastet. Diese Ausführungsform ist vorzugsweise derart weitergebildet, daß der Übertragungsmechanismus einen Hebel aufweist, der bei Bewegung des Betätigungselements auf eine auf den Zentrierbolzen in dessen Eingriffsrichtung einwirkende Feder derart drückt, daß die Feder mit dem Zentrierbolzen in Eingriffsrichtung bewegt wird, bis der Zentrierbolzen in die beabstandete Bohrung eingreift. Eine weniger bevorzugte alternative Ausführungsform könnte dadurch gekennzeichnet sein, daß der in die beabstandete Bohrung eingreifende Bolzen von einer Feder in Eingriffsrichtung vorgespannt ist und der Übertragungsmechanismus einen an dem Bolzen angreifenden, den Bolzen entgegen der Eingriffsrichtung (und der Federwirkung) zurückziehenden Hebel aufweist, wobei der Hebel beim Bewegen des Betätigungselements in der Betätigungsrichtung derart verschwenkt wird, daß der Bolzen freigegeben wird, so daß die Feder den Bolzen gegen die Führungsschiene und, bei entsprechender Positionierung, in die beabstandete Bohrung drückt. Bei diesen Ausführungsformen kann das richtige Positionieren durch einfaches Schieben der Vorrichtung entlang der Führungsschiene beim gleichzeitigen Betätigen des Betätigungselements erreicht werden.

Eine bevorzugte Ausführungsform ist dadurch gekennzeichnet, daß der Übertragungsmechanismus derart auf den Einpreßbolzen einwirkt, daß der Einpreßbolzen erst dann, wenn das Betätigungselement eine vorgegebene Wegstrecke in der Betätigungsrichtung zurückgelegt hat, in Richtung der Führungsschiene mitgenommen wird. Dadurch wird sichergestellt, daß ein Einrasten und Arretieren der Vorrichtung vor dem Beginn des Einpressens der Verschlußkappe abgeschlossen ist. Vorzugsweise wirkt der Übertragungsmechanismus derart auf den Einpreßbolzen ein, daß ein Weiterbewegen des Betätigungselements, nachdem der Einpreßbolzen die Endposition eingenommen hat, bei der die Verschlußkappe die gewünschte Einpreßposition erreicht hat, nicht zu einem Weiterbewegen des Einpreßbolzens führt. Vorzugsweise drückt der Einpreßbolzen beim Erreichen der Endposition gegen einen Anschlag, der beispielsweise durch die Oberfläche der Führungsschiene gebildet wird. Die zuletzt genannte bevorzugte Ausführungsform ist beispielsweise dadurch gekennzeichnet, daß der Übertragungsmechanismus gegen eine auf den Einpreßbolzen drückende Feder drückt. Hierbei ist die Feder so zu dimensionieren und anzuordnen, daß der Einpreßbolzen mit ausreichender Kraft gegen die Verschlußkappe drückt.

Eine bevorzugte Ausführungsform der Vorrichtung verwendet als Führungseinrichtung einen Führungswagen, wie er üblicherweise bei Linearführungen Anwendung findet.

Vorteilhafte und/oder bevorzugte Weiterbildungen der Erfindung sind in den Unteransprüchen gekennzeichnet.

Im folgenden wird die erfindungsgemäße Vorrichtung anhand einer in den Zeichnungen dargestellten bevorzugten Ausführungsform näher beschrieben. In den Zeichnungen zeigen:
Figuren 1A - 1D verschiedene Ansichten einer bevorzugten Ausführungsform der Verschlußkappeneinpreßvorrichtung auf einem Abschnitt einer Führungsschiene;
Figur 2 eine schematische, teilweise geschnittene Seitenansicht der in den Figuren 1A - 1D dargestellten Einpreßvorrichtung in einer Ausgangsstellung ohne nachgeladene Verschlußkappe; und
Figuren 3A - 3E schematische Seitenansichten von fünf aufeinanderfolgenden Bewegungsphasen der Verschlußkappeneinpreßvorrichtung beim Einpressen einer Verschlußkappe in die Bohrung einer Führungsschiene beginnend mit einer Ausgangsstellung (Fig. 3A) mit nachgeladener Verschlußkappe.

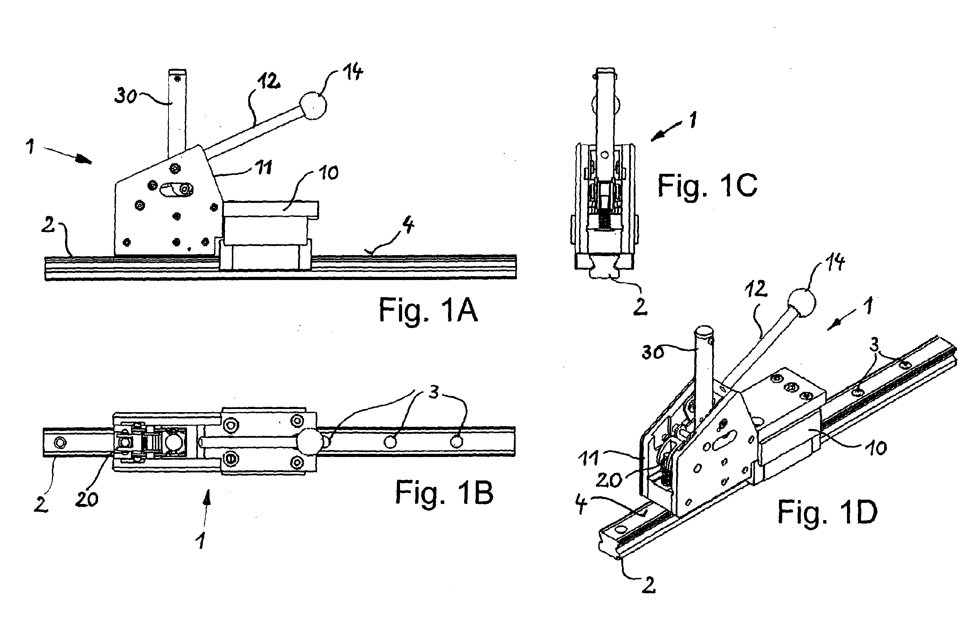

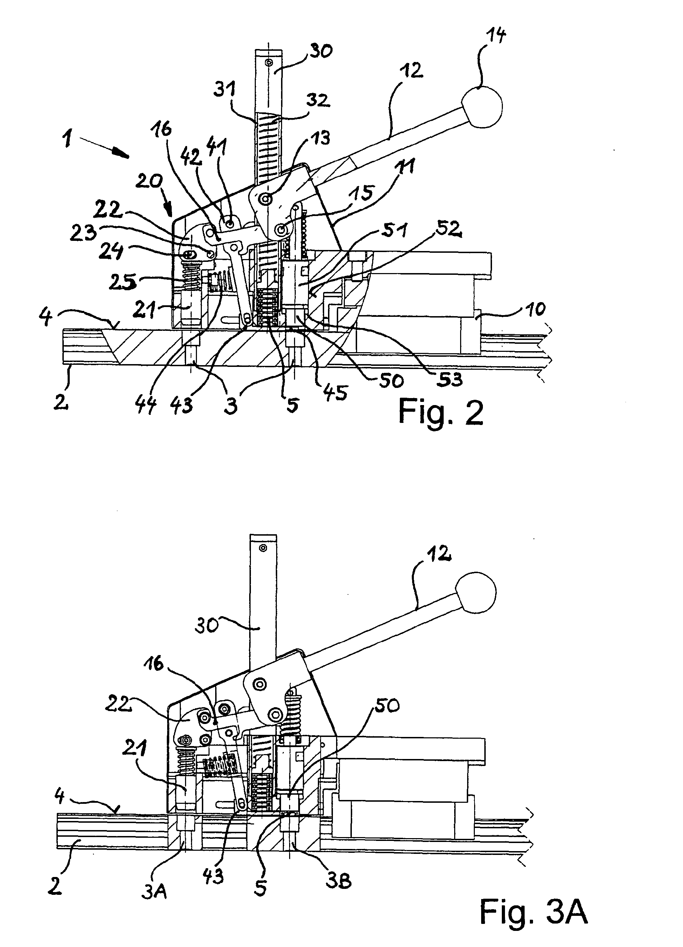

Eine Ausführungsform der erfindungsgemäßen Verschlußkappeneinpreßvorrichtung 1 ist in einer Ausgangsstellung (oder Ruhestellung) in verschiedenen Ansichten in den Figuren 1A - 1D und schematisch mit zum Teil aufgeschnittenem Gehäuse in Figur 2 gezeigt. Die Einpreßvorrichtung 1 ist auf einem Abschnitt einer Führungsschiene 2 aufsitzend dargestellt. Die Führungsschiene 2 weist eine Reihe von durchgehenden Bohrungen 3 auf, durch welche Befestigungsschrauben hindurchgeführt werden, mit deren Hilfe die Führungsschiene 2 auf einer (nicht dargestellten) Unterlage befestigt wird. Die Bohrungen 3 sind in einem oberen Abschnitt erweitert, so daß ein Schraubenkopf der Befestigungsschrauben in dem oberen Abschnitt der Bohrung versenkt werden kann. Nachdem die Führungsschiene 2 mit Hilfe der Befestigungsschrauben auf der Unterlage befestigt worden ist, werden die an einer ebenen Oberseite 4 der Führungsschiene 2 mündenden Bohrungen 3 mit Hilfe von Verschlußkappen 5 derart verschlossen, daß die Oberseite der Verschlußkappen mit der ebenen Oberseite 4 der Führungsschiene 2 fluchtet. Zum Einpressen der Verschlußkappen in die Bohrungen 3 der Führungsschiene 2 dient die in den Figuren dargestellte Verschlußkappeneinpreßvorrichtung 1.

Die Einpreßvorrichtung 1 weist eine Führungseinrichtung in Form eines Führungsschlittens 10 auf, mit deren Hilfe sie auf der Führungsschiene 2 gehalten und geführt wird. Der Führungsschlitten 10 greift in seitliche Führungsnuten der Führungsschiene 2 ein. Die Einpreßvorrichtung 1 wird beispielsweise auf die Führungsschiene 2 aufgesetzt, indem der Führungsschlitten 10 stirnseitig auf die Führungsschiene 2 aufgeschoben wird. Als Führungsschlitten 10 kann beispielsweise ein Linearführungswagen mit an den gegenüberliegenden Führungsnuten der Führungsschiene 2 anliegenden Rollenketten verwendet werden.

Der Führungsschlitten 10 ist an einem Gehäuse 11 der Einpreßvorrichtung 1 befestigt. Das Gehäuse 11 nimmt einen Übertragungsmechanismus auf, der eine Bewegung eines Betätigungselements auf einen Einpreßbolzen 50 zum Einpressen der Verschlußkappen 5, eine Arretiervorrichtung 20 zum Arretieren der Einpreßvorrichtung 1 beim Einpressen sowie einen Zuführmechanismus, der die Verschlußkappen 5 aus einem Vorratsspeicher 30 empfängt und einzeln einer Position zwischen dem Einpreßbolzen 50 und der Oberseite 4 der Führungsschiene 2 zuführt, überträgt. Das Betätigungselement des Übertragungsmechanismus ist ein von der Hand eines Bedieners betätigbarer Schwenkhebel 12. Der Schwenkhebel 12 ist ein abgewinkelter zweiseitiger Hebel, der um eine Achse 13 drehbar gelagert ist. An einem langen Hebelarm ist ein Handgriff 14 angeformt. An dem Ende eines kurzen Hebelarms ist eine Achse 15 befestigt, auf der eine Schubstange 16 drehbar montiert ist. Die Schubstange 16 wirkt sowohl auf eine Arretiervorrichtung zum Arretieren der Einpreßvorrichtung als auch auf einen Zuführmechanismus zum Zuführen von Verschlußkappen ein.

Die Arretiervorrichtung 20 weist bei dem bevorzugten Ausführungsbeispiel einen Zentrierbolzen 21 auf, der zum Positionieren und Arretieren der Einpreßvorrichtung 1 in eine Bohrung 3A der Führungsschiene 2 eingreift, wobei diese zum Positionieren und Arretieren verwendete Bohrung 3A benachbart zu der mit der Verschlußkappe zu verschließenden Bohrung 3B angeordnet und (noch) nicht mit einer Kappe 5 verschlossen ist, wobei diese Art der Arretierung den Umstand ausnutzt, daß sämtliche Bohrungen 3 der Führungsschiene 2 gleichmäßig in einem vorgegebenen Abstand angeordnet sind. Die Einpreßvorrichtung 1 ist somit so ausgebildet, daß der Zentrierbolzen 21 in diesem vorgegebenen Abstand zu dem Einpreßbolzen 50 angeordnet ist. Vorzugsweise ist der vorgegebene Abstand der Abstand zweier benachbarter Bohrungen; es sind aber Ausführungsformen mit einem Mehrfachen dieses Abstands denkbar. Der Zentrierbolzen 21 der Arretiervorrichtung 20 ist an einem Winkelhebel 22 aufgehängt, der um eine Schwenkachse 23 schwenkbar ist. Der Winkelhebel 22 wird von der Schubstange 16 betätigt. Beim Absenken des Schwenkhebels 12 durch Einwirken der Hand eines Bedieners wirkt die Schubstange 16 derart auf den Winkelhebel 22 ein, daß die Aufhängung 24, an der der Zentrierbolzen 21 aufgehängt ist, abwärts bewegt wird. Zusätzlich drückt der Winkelhebel 22 gegen eine Spiralfeder 25, welche wiederum auf einem Ansatz des Zentrierbolzens 21 aufsitzt und den Zentrierbolzen 21 nach unten in die beabstandete Bohrung 3A drückt, während sich die Aufhängung 24 des Winkelhebels 22 in einem Langloch des Zentrierbolzens 21 abwärtsbewegt. Diese nicht starre Kopplung der Aufhängung 24 des Winkelhebels 22 mit den Zentrierbolzen 21, die lediglich zum Hochziehen des Zentrierbolzens 21 dient, während das Herunterdrücken des Zentrierbolzens 21 mittels einer zwischen Winkelhebel 22 und Zentrierbolzen angeordneten Spiralfeder 25 ausgeführt wird, ermöglicht ein sicheres Einrasten des Zentrierbolzens 21 in die beabstandete Bohrung 3 bei gleichzeitiger Möglichkeit einer Weiterbewegung des Schwenkhebels 12 und der angekoppelten Schubstange 16.

Der Schwenkhebel 12 wirkt über die Schubstange 16 außerdem auf einen Zuführmechanismus ein, der Verschlußkappen 5 aus einem Vorratsspeicher 30 empfängt und einzeln einer Position zwischen dem Einpreßbolzen 50 und der Oberseite 4 der Führungsschiene 2 zuführt. Der Zuführmechanismus weist einen um eine Schwenkachse 41 schwenkbaren Betätigungshebel 42 auf, der einen am Boden der Einpreßvorrichtung 1 parallel zur Oberseite 4 der Führungsschiene 2 gleitenden Schieber 43 betätigt. Beim Abwärtsbewegen des Schwenkhebels 12 wirkt die Schubstange 16 auf den Betätigungshebel 42 derart ein, daß der Betätigungshebel 42 den Schieber 43 von der Position zwischen dem Einpreßbolzen 50 und der Oberseite der Führungsschiene 2 wegbewegt. Der Schieber 43 weist eine an die Größe einer Verschlußkappe 5 angepaßte kreissegmentförmige Ausnehmung 45 zur Aufnahme einer Verschlußkappe 5 auf, die von der Position unter dem Einpreßbolzen 50 wegbewegt wird, bis sie eine Position erreicht, in der eine Verschlußkappe 5 aus dem Vorratsspeicher 30 austreten und in die Ausnehmung 45 eintreten an. Dies wird unten anhand der Figuren 3A bis 3E näher beschrieben.

Zum Zurückstellen des Betätigungshebels 42 ist dieser mit einer Rückstellfeder 44 belastet. Wird der Schwenkhebel 12 aufwärts bewegt, so daß die Schubstange 16 in ihre Ausgangsposition zurückgleitet, so drückt die Rückstellfeder 44 den Betätigungshebel 42 des Zuführmechanismus und mit ihm den Schieber 43 in Richtung des Einpreßbolzens 50 zurück, so daß eine in der Ausnehmung 45 des Schiebers 43 enthaltene Verschlußkappe 5 in eine Position zwischen dem Einspreßbolzen 50 und der Oberseite 4 der Führungsschiene 2 geschoben wird.

Schließlich wirkt der Schwenkhebel 12 über den Übertragungsmechanismus auf den Einpreßbolzen 50 der Einpreßvorrichtung 1 ein. Der Übertragungsmechanismus, der die Bewegung des Schwenkhebels 12 auf die vertikale Bewegung des Einspreßbolzens 50 überträgt, ist dabei so ausgebildet, daß die Abwärtsbewegung des Einpreßbolzens 50 erst dann einsetzt, wenn sich der Schwenkhebel 12 soweit bewegt hat, daß der Zentrierbolzen 21 der Arretiervorrichtung 20 durch Eingriff in die beabstandete Bohrung 3A die Einpreßvorrichtung 1 positioniert und arretiert hat. Darüber hinaus bewegt sich der Einpreßbolzen 50 beim Einpressen der Verschlußkappe 5 in die zu verschließende Bohrung 3B nur soweit nach unten, bis die Oberseite der Verschlußkappe 5 mit der Oberseite 4 der Führungsschiene 2 fluchtet. Dies wird durch einen entsprechend justierten Anschlag erreicht, gegen den der Einpreßbolzen 50 bewegt wird. Bei der in Figur 2 dargestellten Ausführungsform weist der Einpreßbolzen 50 eine Abschnitt 51 mit einem erweiterten Durchmesser auf, der innerhalb einer Führungsbohrung 52 geführt ist, die an ihrem unteren Ende einen Anschlag 53 aufweist. Sobald der Übertragungsmechanismus die Abwärtsbewegung des Schwenkhebels 12 auf den Einpreßbolzen 50 überträgt (im letzten Bewegungsabschnitt der Abwärtsbewegung des Schwenkhebels 12), bestimmt die Betätigungskraft des Bedieners (verstärkt durch die Hebelwirkung des Schwenkhebels 12) die Kraft, mit der die Verschlußkappe 5 in die zu verschließende Bohrung 3B eingepreßt wird. Der Einpreßvorgang und gleichzeitig die Abwärtsbewegung des Schwenkhebels 12 sind beendet, sobald der Einpreßbolzen 50 den Anschlag 53 erreicht hat.

Beim Wiederaufwärtsbewegen des Schwenkhebels 12 wird der Einpreßbolzen 50 nach oben mitgenommen, während sich der Schieber 43 des Zuführmechanismus, beladen mit einer aus dem Vorratsspeicher 30 aufgenommenen Verschlußkappe 5, in Richtung des Einpreßbolzens 50 zurückbewegt, so daß die Verschlußkappe 5 in die Position zwischen dem Einpreßbolzen 50 und der Oberseite 4 der Führungsschiene 2 geschoben wird und dort für ein Verschließen der nächsten Bohrung bereitsteht. Der Vorratsspeicher 30 ist bei dem in den Figuren dargestellten Ausführungsbeispiel ein Magazin mit einem Aufnahmerohr 31, dessen Innendurchmesser an den Außendurchmesser der Verschlußkappen 5 angepaßt ist. In dem Aufnahmerohr 31 ist eine Spiralfeder 32 angeordnet, die die enthaltenen Verschlußkappen 5 gegen den Schieber 43 und - bei zurückgefahrenem Schieber - in die Ausnehmung 45 drückt.

Im folgenden werden die Bewegungsabläufe beim Betreiben der erfindungsgemäßen Verschlußkappeneinpreßvorrichtung 1 anhand der Figuren 3A bis 3E näher beschrieben.

Figur 3A zeigt die Ausgangsstellung der Einpreßvorrichtung 1, bei der bereits eine in die zu verschließende Bohrung 3B einzupressende Verschlußkappe 5 geladen ist, das heißt zuvor von dem Schieber 43 in die Position zwischen dem Einpreßbolzen 50 und der Oberseite 4 der Führungsschiene 2 über der Bohrung 3B gebracht worden ist. Der Schwenkhebel 12 mit dem Betätigungsgriff 14 befindet sich in der obersten Position, und die Schubstange 16 ist in die Ausgangsposition zurückgezogen. Der Vorratsspeicher 30 ist mit mehreren Verschlußkappen 5 gefüllt. Der Zentrierbolzen 21 befindet sich ebenfalls in seiner oberen Ausgangsposition, so daß die Einpreßvorrichtung 1 frei entlang der Führungsschiene 2 bewegt werden kann. Der Bediener schiebt die Einpreßvorrichtung 1 auf der Führungsschiene 2 in die Nähe einer gewünschten Position. Gleichzeitig übt er einen leichten Druck auf den Schwenkhebel 12 aus, so daß die Schubstange 16 auf den Winkelhebel 22 und dieser über die Feder 25 auf den Zentrierbolzen 21 drückt. Der Zentrierbolzen 21 wiederum drückt auf die Oberseite 4 der Führungsschiene 2, so daß beim Weiterbewegen der Einpreßvorrichtung 1 der Zentrierbolzen 21 in eine Bohrung 3A einrastet, sobald die Einpreßvorrichtung 1 die entsprechende Position erreicht hat.

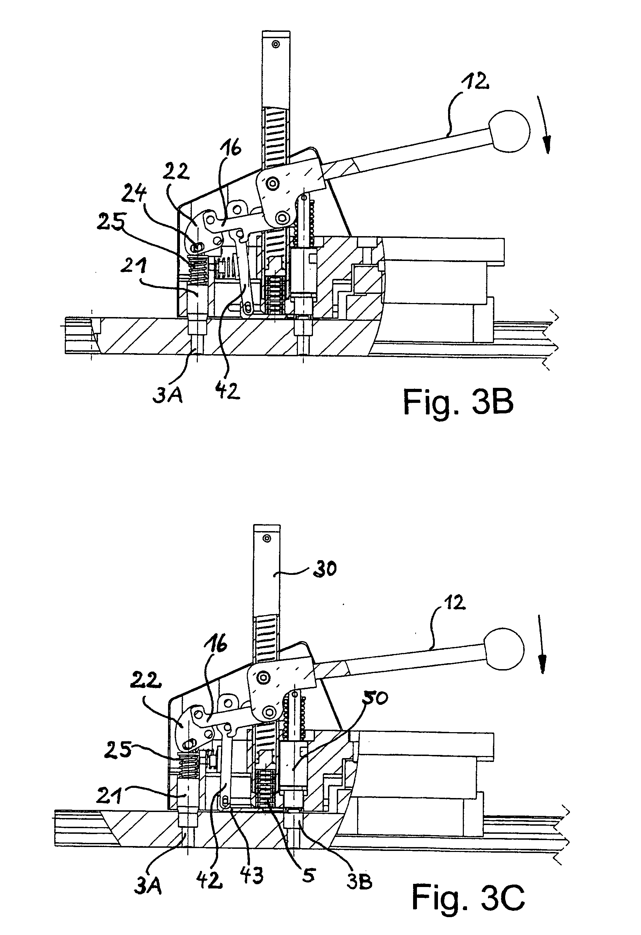

In Figur 3B ist der beim beginnenden Betätigen des Schwenkhebels 12 nach Einrasten des Zentrierbolzens 21 in die Bohrung 3A erreichte Zustand dargestellt. Der Schwenkhebel 12 ist weiter nach unten bewegt worden, so daß die Schubstange 16 den Winkelhebel 22 verschwenkt hat. Die Aufhängung 24 des Zentrierbolzens 21 hat sich in einem Langloch des Zentrierbolzens 21 ein Stück nach unten bewegt. Gleichzeitig drückt eine Außenkante des Winkelhebels 22 unterhalb der Aufhängung 24 auf einen den Zentrierbolzen 21 umgebenden Ring, wobei der Ring wiederum auf die Spiralfeder 25 drückt. Die Spiralfeder 25 überträgt die Kraft auf einen Ansatz des Zentrierbolzens 21 und drückt den Zentrierbolzen 21 in die Bohrung 3A. In Figur 3B ist der Zustand gezeigt, bei dem der Zentrierbolzen 21 vollständig in die Bohrung 3A eingerastet ist und sich die Schubstange 16 gegen einen an dem Betätigungshebel 42 befestigten Anschlag bewegt hat, ohne bereits den Betätigungshebel 42 zu verschwenken. Der Zuführmechanismus zum Zuführen der Verschlußkappen 5 wird somit noch nicht betätigt. Darüber hinaus wirkt der Schwenkhebel 12 auch noch nicht auf den Übertragungsmechanismus zum Absenken des Einpreßbolzens 50 ein.

Bei fortgesetztem Abwärtsbewegen des Schwenkhebels 12 ergibt sich dann der in Figur 3C gezeigte Zustand. Die Schubstange ist weiterbewegt worden, so daß sie den Winkelhebel 22 weiter um die Schwenkachse 23 gedreht hat. Die weitergehende Abwärtsbewegung der Aufhängung 24 und das stärkere Zusammendrücken der Feder 25 führen allerdings nicht zu einer Weiterbewegung des Zentrierbolzens 21, sondern lediglich zu einer stärkeren Arretierung. Die Schubstange 16 hat nunmehr auch den Betätigungshebel 42 um die Schwenkachse 41 verschwenkt, so daß der Betätigungshebel 42 den Schieber 43 entlang der Oberseite 4 der Führungsschiene 2 von der Position zwischen dem Einpreßbolzen 50 und der zu verschließenden Bohrung 3B wegbewegt hat. Allerdings ist bei der in Figur 3C dargestellten Position der Schieber 43 noch nicht so weit bewegt worden, daß eine nächste Verschlußkappe 5 aus dem Vorratsspeicher 30 in die Ausnehmung 45 des Schiebers 43 nachrutschen konnte. Ferner ist bei dem in Figur 3C gezeigten Zustand noch nicht die Schwenkposition des Hebels 12 erreicht, bei de dieser über den Übertragungsmechanismus auf den Einpreßbolzen 50 einwirkt. Die einzupressende Kappe befindet sich noch immer über der zu verschließenden Bohrung 3B.

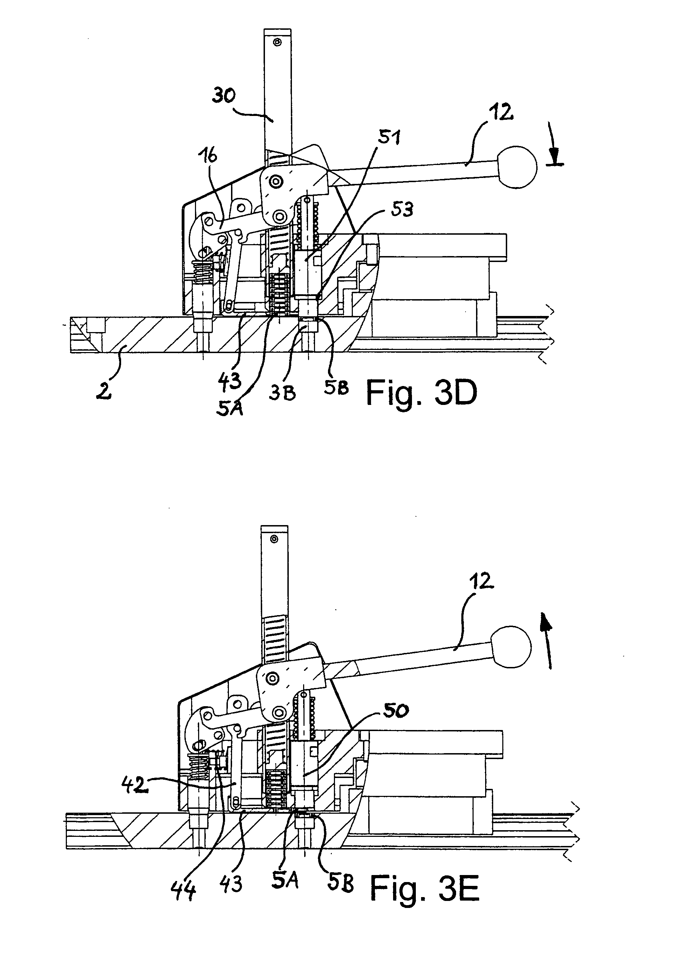

Figur 3D zeigt die Endstellung nach dem Einpressen einer Verschlußkappe 5B in die zu verschließende Bohrung 3B. Der Schwenkhebel 12 hat seine Endposition erreicht. Die Schubstange 16 hat den Betätigungshebel 42 soweit verschwenkt, daß der Schieber 43 die Endposition erreicht hat, bei der eine Verschlußkappe 5A aus dem Vorratsspeicher 30 in die Ausnehmung 45 des Schiebers 43 nachrutschen konnte. Der Einpreßbolzen 50 wurde soweit nach unten gedrückt, bis der erweiterte Abschnitt 51 den Anschlag 53 erreicht hat. Eine weitere Abwärtsbewegung des Einpreßbolzens 50 ist nicht möglich. Der Anschlag 53 ist dabei so justiert, daß die Oberseite der eingepreßten Verschlußkappe 5B mit der Oberseite 4 der Führungsscheine 2 fluchtet.

Figur 3E zeigt eine Position, bei der der Schwenkhebel 12 ein Stück zurückbewegt worden ist. Der Einpreßbolzen 50 wurde wieder nach oben in die Ausgangsstellung zurückbewegt. Die Schubstange 16 wird zurückgezogen, so daß die Rückstellfeder 44 den Betätigungshebel 42 und mit diesem den Schieber 43 in Richtung auf den Einschubbolzen 50 zurückschiebt. Beim Zurückschieben des Schiebers 43 wird die in der Ausnehmung 45 einliegende nachzuladende Verschlußkappe 5A in die Position unter dem Einpreßbolzen 50, das heißt über die bereits eingepreßte Verschlußkappe 5B geschoben.

Beim fortgesetzten Aufwärtsbewegen des Schwenkhebels 12, welcher bei einer Verminderung der von der Hand des Bedieners nach unten ausgeübten Kraft durch eine Rückstellfeder nach oben bewegt wird, wird schließlich auch der Winkelhebel 22 der Arretiervorrichtung 20 von der Stange 16 soweit zurückgezogen, bis die Aufhängung 24 am oberen Ende des Langlochs am Zentrierbolzen 21 anliegt und den Zentrierbolzen schließlich nach oben aus der Bohrung 3A hebt. Dann ist die Arretierung der Einpreßvorrichtung 1 gelöst, und die Einpreßvorrichtung 1 kann von dem Bediener zu der nächsten zu verschließenden Bohrung 3weitergeschoben werden.

Während des gesamten Ablaufs braucht der Bediener lediglich mit einer Hand auf den Griff 14 des Schwenkhebels 12 zuzugreifen und mit diesem die Einpreßvorrichtung 1 jeweils in Richtung auf die nächste zu verschließende Bohrung weiterzuschieben (nach links in den Figuren 3A bis 3E) sowie dabei den Betätigungshebel nach unten zu drücken und wieder loszulassen. Die Anordnung des Betätigungsgriffs auf der Seite des Eingriffsbolzens 50, die dem Zentrierbolzen 21 gegenüber liegt, ermöglicht eine ergonomische Betätigung, da sowohl zum Weiterbewegen der Einpreßvorrichtung als auch zu deren Betätigung lediglich manuelle Druckkräfte auszuüben sind. Der Bediener braucht lediglich dann an dem Griff zu ziehen, wenn die Einpreßvorrichtung 1 über eine zu verschließende Bohrung hinaus gefahren wurde. Dies wiederum läßt sich aber auf einfache Weise vermeiden, indem beim Weiterbewegen der Einpreßvorrichtung gleichzeitig ein gewisser Druck nach unten auf den Schwenkhebel 12 ausgeübt wird, so daß der Zentrierbolzen 21 in die nächste freie Bohrung einrastet, wobei der Einpreßbolzen 50 über der nächsten zu verschließenden Bohrung positioniert wird.

Es sind auch alternative Ausführungsformen denkbar. So braucht der Zufuhrmechanismus nicht zwischen der Arretiervorrichtung und dem Einpreßbolzen angeordnet zu sein; er kann auch an der der Arretiervorrichtung 20 gegenüberliegenden Seite des Einpreßbolzens 50 oder neben dem Einpreßbolzen 50 angeordnet sein. Darüber hinaus sind weitere Hebel und Schubstangen oder andere Anordnungen der Übertragungsmechanismen denkbar.

## Patentansprüche

1. Vorrichtung (1) zum Einpressen von Verschlußkappen (5) in mehrere Bohrungen (3), die entlang der Führungsschiene (2) in einem vorgegebenen Abstand zueinander angeordnet sind und an einer Oberfläche (4) der Führungsschiene (2) münden,
wobei die Vorrichtung (1) aufweist:
einen Einpreßbolzen (50) zum Einpressen einer auf einer zu verschließenden Bohrung (3B) positionierten Verschlußkappe (5) in diese Bohrung (3),
eine Führungseinrichtung (10) zum Führen der Vorrichtung (1) bei deren Bewegung entlang der Führungsschiene (2) derart, daß der Einpreßbolzen (50) über den Bohrungen positioniert werden kann,
eine Arretiervorrichtung (20) zum Arretieren der Vorrichtung (1) beim Einpressen,
ein Vorratsspeicher (30) zum Aufnehmen mehrerer Verschlußkappen (5) und
einen Zuführmechanismus (41-45), der die Verschlußkappen (5) aus dem Vorratsspeicher (30) empfängt und einzeln einer Position zwischen dem Einpreßbolzen (50) und der Oberfläche (4) der Führungsschiene zuführt,
**dadurch gekennzeichnet,**
**daß** ein Betätigungselement (12,14) über einen Übertragungsmechanismus (16,22-25) auf die Arretiervorrichtung (20) und den Einpreßbolzen derart einwirkt, daß bei einem kontinuierlichen Bewegen des Betätigungselements (12,14) in einer Betätigungsrichtung zunächst die Arretiervorrichtung (20) in eine einen vorgegebenen Abstand zu der zu verschließenden Bohrung (3B) aufweisende beabstandete Bohrung (3A) eingreift und die Vorrichtung (1) arretiert, bevor beim Weiterbewegen des Betätigungselements (12,14) der Einpreßbolzen (50) gegen eine über der zu verschließenden Bohrung (3B) positionierte Verschlußkappe (5) drückt und diese in die Bohrung (3B)einpreßt, und
**daß** das Betätigungselement (12,14) über den Übertragungsmechanismus (16,22-25) auch auf den Zuführmechanismus (41-45) derart einwirkt, daß bei dem Bewegen des Betätigungselements (12,14) in der Betätigungsrichtung und/oder dem anschließenden Zurückbewegen des Betätigungselements entgegen der Betätigungsrichtung eine nächste Verschlußkappe (5) der Position zwischen dem Einpreßbolzen (50) und der Oberfläche (4) der Führungsschiene (2) zugeführt wird.

2. Vorrichtung nach Anspruch 1, **dadurch gekennzeichnet, daß** beim Bewegen des Betätigungselements in der Betätigungsrichtung der Übertragungsmechanismus derart auf den Zuführmechanismus einwirkt, daß eine nächste Verschlußkappe aus dem Vorratsspeicher entnommen wird.

3. Vorrichtung nach Anspruch 2, **dadurch gekennzeichnet, daß** beim Zurückbewegen des Betätigungselements entgegen der Betätigungsrichtung der Übertragungsmechanismus derart auf den Zuführmechanismus einwirkt, daß dieser eine nächste Verschlußkappe der Position zwischen dem Einpreßbolzen und der Oberfläche der Führungsschiene zuführt.

4. Vorrichtung nach einem der Ansprüche 1 - 3, **dadurch gekennzeichnet, daß** das Betätigungselement von der Hand eines Bedieners betätigbar ist.

5. Vorrichtung nach Anspruch 4, **dadurch gekennzeichnet, daß** das Betätigungselement ein von der Hand eines Bedieners betätigbarer Schwenkhebel (12,14) ist.

6. Vorrichtung nach einem der Ansprüche 1 - 5, **dadurch gekennzeichnet, daß** die Arretiervorrichtung (20) einen in die beabstandete Bohrung (3A) eingreifenden Zentrierbolzen (21) aufweist.

7. Vorrichtung nach Anspruch 6, **dadurch gekennzeichnet, daß** der Übertragungsmechanismus einen Hebel (22) aufweist, der bei Bewegung des Betätigungselements (12,14) auf eine auf den Zentrierbolzen (21) in dessen Eingriffsrichtung einwirkende Feder (25) derart drückt, daß die Feder (25) mit dem Zentrierbolzen in Eingiffsrichtung bewegt werden, bis der Zentrierbolzen (21) in die beabstandete Bohrung (3A) eingreift.

8. Vorrichtung nach einem der Ansprüche 1 - 7, **dadurch gekennzeichnet, daß** der Übertragungsmechanismus derart auf den Einpreßbolzen einwirkt, daß der Einpreßbolzen erst dann, wenn das Betätigungselement eine vorgegebene Wegstrecke in der Betätigungsrichtung zurückgelegt hat, in Richtung der Führungsschiene mitgenommen wird.

9. Vorrichtung nach Anspruch 8, **dadurch gekennzeichnet, daß** der Übertragungsmechanismus derart auf den Einpreßbolzen einwirkt, daß ein Weiterbewegen des Betätigungselements, nachdem der Einpreßbolzen die Endposition eingenommen hat, bei der die Verschlußkappe die gewünschte Einpreßposition erreicht hat, nicht zu einem Weiterbewegen des Einpreßbolzens führt.

10. Vorrichtung nach Anspruch 9, **dadurch gekennzeichnet, daß** der Einpreßbolzen (50) bei Erreichen der Endposition gegen einen Anschlag (53) drückt.

11. Vorrichtung nach Anspruch 9 oder 10, **dadurch gekennzeichnet, daß** der Übertragungsmechanismus gegen eine auf den Einpreßbolzen drückende Feder drückt.

12. Vorrichtung nach einem der Ansprüche 1 - 11, **dadurch gekennzeichnet, daß** die Führungseinrichtung einen Führungswagen (10) umfaßt.

## Claims

1. A device (1) for pressing in closure caps (5) in a plurality of holes (3) which are arranged along the guide rail (2) at a predefined distance from one another and open at a surface (4) of said guide rail (2),
wherein the device (1) comprises:
a pressing-in bolt (50) for pressing in a closure cap (5) positioned on a hole (3B) to be closed into said hole (3),
a guide device (10) for guiding the device (1) during its movement along the guide rail (2) in such a manner than the pressing-in bolt (50) can be positioned over the holes,
a stopping device (20) for stopping the device (1) during pressing-in,
a supply store (30) for receiving a plurality of closure caps (5) and
a feed mechanism (41-45) which receives the closure caps (5) from the supply store (30) and feeds them individually to a position between the pressing-in bolt (50) and the surface (4) of the guide rail,
**characterised in**
**that** an actuating element (12, 14) acts via a transmission mechanism (16, 22-25) on the stopping device (20) and the pressing-in bolt in such a manner that during a continuous movement of the actuating element (12, 14) in a direction of actuation, firstly the stopping device (20) engages in a spaced-apart hole (3A) having a predefined distance from the hole (3B) to be closed and stops the device (1) before, during a further movement of the actuating element (12, 14), the pressing-in bolt (50) presses against the closure cap (5) positioned over the hole (3B) to be closed and presses said cap into said hole (3B) and that the actuating element (12, 14) acts via the transmission mechanism (16, 22-25) on the feed mechanism (41-45) in such a manner that during the movement of the actuating element (12, 14) in the direction of actuation and/or the subsequent return movement of the actuating element in the direction opposite to the direction of actuation, a next closure cap (5) is fed to the position between the pressing-in bolt (50) and the surface (4) of the guide rail (2).

2. The device according to claim 1, **characterised in that** during the movement of the actuating element in the direction of actuation, the transmission mechanism acts on the feed mechanism in such a manner that the next closure cap is removed from the supply store.

3. The device according to claim 2, **characterised in that** during a return movement of the actuating element in the direction opposite to the direction of actuation, the transmission mechanism acts on the feed mechanism in such a manner that this feeds a next closure cap to the position between the pressing-in bolt and the surface of the guide rail.

4. The device according to one of claims 1-3, **characterised in that** the actuating element can be actuated by the hand of an operator.

5. The device according to claim 4, **characterised in that** the actuating element is a pivoted lever (12, 14) which can be actuated by the hand of an operator.

6. The device according to one of claims 1-5, **characterised in that** the stopping device (20) is a centring bolt (21) which engages in a spaced-apart hole (3A).

7. The device according to claim 6, **characterised in that** the transmission mechanism has a lever (22) which, during movement of the actuating element (12, 14), presses on a spring (25) acting on the centring bolt (21) in its direction of engagement in such a manner that the springs (25) are moved with the centring bolt in the direction of engagement until the centring bolt (21) engages in the spaced-apart hole (3A).

8. The device according to one of claims 1-7, **characterised in that** the transmission mechanism acts on the pressing-in bolt in such a manner that the pressing-in bolt is only entrained in the direction of the guide rail when the actuating element has covered a predefined distance in the direction of actuation.

9. The device according to claim 8, **characterised in that** the transmission mechanism acts on the pressing-in bolt in such a manner that a further movement of the actuating element after the pressing-in bolt has adopted the end position at which the closure cap has reached the desired end position does not result in a further movement of the pressing-in bolt.

10. The device according to claim 9, **characterised in that** on reaching the end position, the pressing-in bolt (50) presses against a stop (53).

11. The device according to claim 9 or 10, **characterised in that** the transmission mechanism presses against a spring pressing on the pressing-in bolt.

12. The device according to one of claims 1-11, **characterised in that** the guide device comprises a guide carriage (10).

## Revendications

1. Dispositif (1) d'enfoncement de bouchons (5) dans plusieurs perçages (3), qui le long de la glissière de guidage (2) sont disposés à une distance prédéfinie les uns par rapport aux autres et qui débouchent sur une surface (4) de la glissière de guidage (2),
le dispositif (1) comportant :
un boulon d'enfoncement (50) destiné à enfoncer un bouchon (5) positionné sur un perçage à fermer (3B) dans ledit perçage (3),
un dispositif de guidage (10) pour guider le dispositif (1) lors de son déplacement le long de la glissière de guidage (2), de sorte que le boulon d'enfoncement (50) puisse être positionné au dessus des perçages,
un dispositif de blocage (20) pour bloquer le dispositif (1) lors de l'enfoncement,
un réservoir de stockage (30) pour accueillir plusieurs bouchons (5),
un mécanisme d'alimentation (41 à 45), qui réceptionne les bouchons (5) à partir du réservoir de stockage (30) et les alimente individuellement dans une position entre le boulon d'enfoncement (50) et la surface (4) de la glissière de guidage,
**caractérisé en ce que**,
un actionneur (12,14) agit par l'intermédiaire d'un mécanisme de transmission (16,22 à 25) sur le dispositif de blocage (20) et sur le boulon d'enfoncement, de sorte que lors d'un déplacement continu de l'actionneur (12,14) dans une direction d'actionnement, d'abord le dispositif de blocage (20) s'engage dans un perçage (3A) distant, présentant une distance prédéfinie par rapport au perçage à fermer (3B) et bloque le dispositif (1) avant que, à la poursuite du déplacement de l'actionneur (12, 14), le boulon d'enfoncement (50) ne presse contre un bouchon (5) positionné au dessus du perçage (3B) à fermer et n'enfonce ce dernier dans le perçage (3B), et
**en ce que** l'actionneur (12,14) agit par l'intermédiaire du mécanisme de transmission (16, 22 à 25) sur le mécanisme d'alimentation (41 à 45) de sorte que, lors du déplacement de l'actionneur (12,14) dans la direction d'actionnement et/ou lors du déplacement en retour de l'actionneur à l'encontre de la direction d'actionnement, un bouchon (5) suivant soit alimenté dans la position entre le boulon d'enfoncement (50) et la surface (4) de la glissière de guidage (2).

2. Dispositif selon la revendication 1, **caractérisé en ce que,** lors du déplacement de l'actionneur dans la direction d'actionnement, le mécanisme de transmission agit sur le mécanisme d'alimentation de sorte qu'un bouchon suivant soit prélevé dans le réservoir de stockage.

3. Dispositif selon la revendication 2, **caractérisé en ce que,**
au déplacement en retour de l'actionneur à l'encontre de la direction d'actionnement, le mécanisme de transmission agit sur le mécanisme d'alimentation de sorte que celui-ci alimente un bouchon suivant dans la position entre le boulon d'enfoncement et la surface de la glissière de guidage.

4. Dispositif selon l'une quelconque des revendications 1 à 3, **caractérisé en ce que** l'actionneur est susceptible d'être actionné par la main d'un opérateur.

5. Dispositif selon la revendication 4, **caractérisé en ce que** l'actionneur est un levier pivotant (12, 14) susceptible d'être actionné par la main d'un opérateur.

6. Dispositif selon l'une quelconque des revendications 1 à 5, **caractérisé en ce que** le dispositif de blocage (20) comporte un boulon de centrage (21) s'engageant dans le perçage distant (3A).

7. Dispositif selon la revendication 6, **caractérisé en ce que** le mécanisme de transmission comporte un levier (22) qui lors du déplacement de l'actionneur (12,14) presse sur un ressort (25) agissant sur le boulon de centrage (21) dans sa direction d'engagement, de sorte que le ressort (25) avec le boulon de centrage soient déplacés en direction d'engagement jusqu'à ce que le boulon de centrage (21) s'engage dans le perçage distant (3A) .

8. Dispositif selon l'une quelconque des revendications 1 à 7, **caractérisé en ce que** le mécanisme de transmission agit sur le boulon d'enfoncement de sorte que le boulon d'entraînement ne soit entraîné en direction de la glissière de guidage qu'une fois que l'actionneur a parcouru un trajet prédéfini dans la direction d'actionnement.

9. Dispositif selon la revendication 8, **caractérisé en ce que** le mécanisme d'entraînement agit sur le boulon d'enfoncement de sorte qu'un déplacement ultérieur de l'actionneur, une fois que le boulon d'enfoncement a adopté sa position finale, dans laquelle le bouchon a atteint la position d'enfoncement ne mène pas à un déplacement ultérieur du boulon d'enfoncement.

10. Dispositif selon la revendication 9, **caractérisé en ce qu'**à l'atteinte de la position finale, le boulon d'enfoncement (50) presse contre une butée (53).

11. Dispositif selon la revendication 9 ou 10, **caractérisé en ce que** le mécanisme de transmission presse contre un ressort appuyant sur le boulon d'enfoncement.

12. Dispositif selon l'une quelconque des revendications 1 à 11, **caractérisé en ce que** le dispositif de guidage comprend un chariot de guidage (10).
